# EUROPEAN PATENT SPECIFICATION

(11) **EP 3 032 937 B1**
(45) Date of publication and mention of the grant of the patent: **06.09.2017**
(21) Application number: 14744645.4
(22) Date of filing: 02.07.2014
(51) Int. Cl.: A01F 25/20, B66C 3/02, D07B 1/16, D07B 1/02, B66C 3/12, A01K 5/00

(54) **WEAR-RESISTANT LIVESTOCK FEED GRIPPING JAW**
VERSCHLEISSFESTE FUTTERSPANNBACKE FÜR VIEH
MÂCHOIRE RÉSISTANT À L'USURE POUR PRÉHENSION D'ALIMENTS POUR BÉTAIL

(30) Priority: 14.08.2013 NL 2011303
(43) Date of publication of application: 22.06.2016
(73) Proprietor: Lely Patent N.V., 3147 PB Maassluis (NL)
(72) Inventor: VAN DER LINDE, Jakob, NL-3147 PA Maassluis (NL); APPELHOF, Hans, NL-3147 PA Maassluis (NL)
(74) Representative: Octrooibureau Van der Lely N.V.
(86) International application number: PCT/NL2014/050431
(87) International publication number: WO 2015/023177

(56) References cited:
- EP-A2- 0 318 136
- WO-A1-2011/136650
- DE-U- 1 701 991
- GB-A- 2 436 324

## Description

The invention relates to a device for use in an agricultural livestock feed gripping jaw device. The present device comprises a drivable cable and a frame with a guide element, in particular a winding drum or a disc which is rotatable in the frame, around which guide element said cable is passed in such a way that when the cable is driven, the cable is guided over the guide element.

Such devices are known in the prior art and are used, inter alia, to operate a gripping jaw, such as in DE1701991 U and GB232043. Such a gripping jaw may be used, for example, in a livestock feed-displacement system, such as the Lely Vector™.

With such devices, there are sometimes constraints with regard to the dimensions or the weight of the components to be used, so that the components remain small, often with a small diameter. In addition, in a general sense, the superfluous use of material for the components is a drawback. Furthermore, due to the fact that the device is often used 24 hours a day, for example with said Vector™ system, the device is subjected to a high load. Known devices suffer from high wear undesirably frequently, which even includes cable rupture.

It is an object of the present invention to improve said device in such a way that the drawback of undesirably high wear occurs to a lesser degree.

This object is achieved by the present invention by means of the device according to Claim 1, in particular a device for use in an agricultural livestock feed gripping jaw, comprising a drivable cable and a frame with a guide element, in particular a disc or winding drum which is rotatable in the frame, around which guide element said cable is passed in such a way that when the cable is driven, the cable is guided over the guide element, wherein the cable comprises a core and a sheath, wherein the core comprises a plurality of first strands of ultrahigh molecular weight polyethene fibres, in particular Dyneema® by DSM or an equivalent thereof, and comprises a plurality of second strands of fibres of a polyester which are interwoven with the former, wherein the sheath comprises an interweaving of a plurality of strands, containing 75-100% of third strands of fibres of extended polyamide, in particular Nylon 6,6, such as Cordura® by INVISTA, and 0-25% fourth strands of fibres of polyester, and wherein the rotatable element, at least on the outer side thereof, comprises ultra high molecular weight polyethene, in particular HMPE 1000.

The inventors have found that, in practice, such a device surprisingly has a much longer service life compared to the known devices comprising, for example, steel components, such as cables. Livestock feed, in particular silage, which is relatively acidic, is often found to be quite an aggressive material which causes high wear to the (known) device, in particular to the steel parts. In addition, it often adheres to the components to a considerable degree, so that it can exert its detrimental effect for a relatively long time. By contrast, the present invention has a very low adherence, so that the livestock feed will adhere only to a limited degree and thus causes less wear to the device. In addition, said core material for the cable has a smaller bending radius than steel, so that wear is also reduced.

With the present invention, the cable is drivable, for example, by hand. Obviously, the cable will virtually always be driven by a driving motor which is arranged in the device and under the control of a drive control unit. In this case, the cable will be guided over the guide elements and exert a pulling force at the other end. The guide elements are in particular a rotatable disc or winding drum. Such elements often form part of a pulley construction in the device. On the outer side thereof, the disc is often provided with a groove which guides the cable.

The term "ultrahigh molecular weight polyethene", also abbreviated here as UHMwPE, is understood to mean a polyethene having 10⁵ or more monomers per molecule/chain, such as for example used in the synthetic fibre Dyneema® by DSM or technical equivalents thereof. Preferably, the polyethene even comprises at least 10⁶ monomers per molecule with a view to tensile strength, wear resistance and soil-repellent capacity. The fibres are directed, that is to say the chains in the fibres are substantially parallel to each other.

Particular embodiments of the invention are described in the attached dependent claims and in the more detailed description below.

In an advantageous embodiment, the core comprises an equal number of first and second strands, in particular six of each. An equal distribution of polyethene and polyester fibres has been found to result in a favourable combination of strength and resistance to wear, while a total of twelve strands in particular is a total number of strands which can easily be processed/interwoven. However, other combinations of numbers of strands and ratios are not excluded.

In an attractive manner, the sheath contains 100% of third strands. In practice, a high percentage of polyamide, and in particular 100%, has been found to result in an increased service life.

It should be noted that, for example, EP0318136 describes cables/ropes which consist of a core of a copolymer of UHMwPE and an alphaolefin, and a sheath of, for example, braided polyamide.

In a particular device, at least the outer side of the guide element is made of an ultrahigh molecular weight polyethene, in particular HMPE 1000. It has been found that such a material not only exhibits a high mechanical resistance to wear, but also a very low adhesiveness for livestock feed and thus a very low (chemical) wear, so that this embodiment has significant advantages, in particular when used for livestock feed. In this case, HPME 1000 is one of the common designations for a UHMwPE in solid state.

In an attractive embodiment, the frame comprises a plurality of guide elements over which the cable moves when the cable is being driven, wherein each guide element is made, at least on the outer side thereof or in its entirety, of ultrahigh molecular weight polyethene, in particular HMPE 1000. If each of the guide elements is produced in this way, a device is obtained which has an optimum service life, in particular when used with livestock feed. Of course, this relates to the guide elements which (may) come into contact with livestock feed. Other requirements may obviously apply to other guide elements in different parts of the device.

The invention also provides a livestock feed gripping jaw device, comprising two mutually coupled gripping jaw halves and a gripping jaw opening and closing device which comprises a device according to the present invention. Such a livestock feed gripping jaw device or livestock feed-displacement device, respectively, brings out the advantages of the invention in an optimum manner. Livestock feed-displacement device, comprising a rail system with a travelling crab which is autonomously displaceable thereon, with a livestock feed gripping jaw device according to the present invention which is attached thereto so as to be autonomously height-adjustable, as well as a control system for displacing the travelling crab, for adjusting the height of the livestock feed gripping jaw device and for controlling the gripping jaw opening and closing device. An example of a gripping jaw device which could be configured or adapted in this way is the Orbiter™ or the livestock feed grabber of the Vector™ by Lely. This is a gripping device for gripping and displacing livestock feed using a gripping jaw which grabs into the livestock feed. An example of a livestock feed-displacement device which could be configured or adapted in this way is the Vector™ by Lely. These are autonomous systems, where it is of great importance that they function reliably and thus suffer little from wear.

The invention will now be explained in more detail by means of a number of non-limiting embodiments, as described below and as illustrated in the drawing, in which:
Figures 1A, 1B diagrammatically show a side view of two positions of a livestock feed gripping jaw device comprising a device according to the invention;
Figure 2 diagrammatically shows a side view of a livestock feed-displacement device according to the invention; and
Fig. 3 diagrammatically shows a cross-sectional view of a cable for use in a device according to the invention.

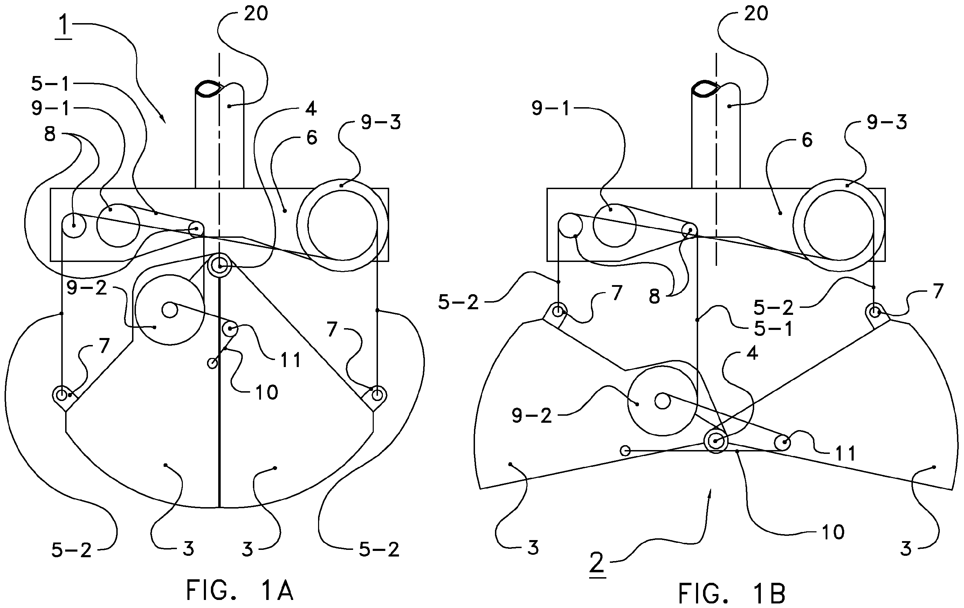

Figures 1A and 1B diagrammatically show a side view of two positions of a livestock feed gripping jaw device 1 comprising a device 2 according to the invention. In this case, the livestock feed gripping jaw device 1 comprises two gripping jaw halves 2 which hinge about a hinge 4. Reference numerals 5-1 and 5-2 denote a closing/auxiliary hoisting strap and main hoisting straps, respectively, and reference numeral 6 denotes a frame which forms part of a travelling crab 20 which is not shown in its entirety here. Reference numeral 7 denotes suspension eyelets and reference numeral 8 denotes guide rollers. Winding drums are denoted by reference numerals 9-1, 9-2 and 9-3, while reference numeral 10 denotes a cable and 11 a closure guide element.

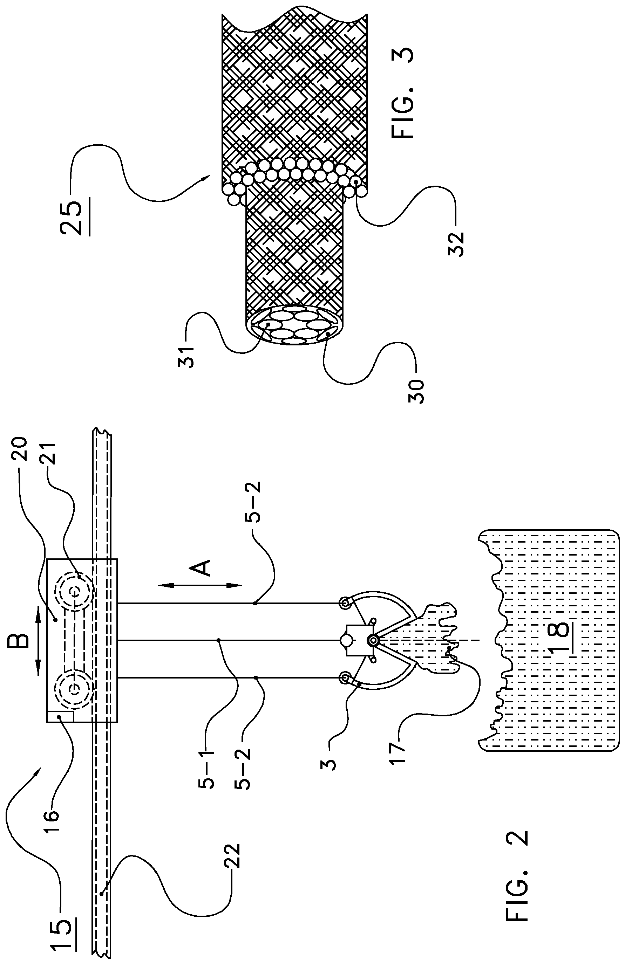

Figure 1A shows the livestock feed gripping jaw device 1 in a closed and hoisted-up position. In this case, the hoisting straps 5-1 and 5-2 are wound up to their maximum and the gripping jaw halves 3 are positioned against each other and against the frame 6. By easing or winding up the closing/auxiliary hoisting strap 5-1 and the main hoisting straps 5-2 differently in a suitable manner, such as by unwinding the closing/auxiliary hoisting strap 5-1 about winding drum 9-1 and winding drum 9-2 and via guide rollers 8, controlled by a motor (not shown), the gripping jaw halves 3 will open by hinging about the hinge 4, as is shown in Figure 1B. During this easing, the cable 10 will also secondarily be eased via the smaller shaft on the outer side of the winding drum 9-2. If then, in addition, the main hoisting straps 5-2 are eased in a suitable but known manner and synchronized with the closing/auxiliary hoisting strap 5-1, controlled by a motor which is likewise not shown, the livestock feed gripping jaw device 2 will be lowered in its entirety compared to the frame 6, and, more particularly in an open position. Thus, it is for example possible to grab livestock feed, as will be explained in more detail in Figure 2.

In order to close the gripping jaw device, at first the motor will be operated which causes the closing/auxiliary hoisting strap 5-1 to wind up around the winding drum 9-1. However, initially, the closing/auxiliary hoisting strap 5-1 will be unwound from the winding drum 9-2, thus exerting a winding-up force on the cable 10, which will then move the gripping jaw halves 3 towards each other via the closing guide element 11 and will close the gripping jaw. In this case, it is advantageous to use a force or torque augmentation in a known manner, in particular with the winding drum 9-2, as is illustrated in the figures.

As can be seen, in particular the cable 10, the winding drum 9-2 and the closure guide element 11 may come into contact with livestock feed and may become soiled. According to the invention, it is then advantageous to configure at least one of the cable 10 and at least the outer side or the entirety of said components 11 and/or 9-2 according to the invention. For the cable 10, this is as will be explained in more detail below in connection with Figure 3. At least the outer side of the winding drum 9-2 and the closure guide element 11, usually a roller, is coated with or is completely made of ultrahigh molecular weight polyethene, also referred to as UHMwPE or HMPE, and in particular HMPE 1000 having at least 10⁶ monomers per molecule. This ensures a good dirt-repellent effect, in this case a livestock feed-repellent effect, in combination with good resistance to wear. In this case, it should be noted that the hoisting straps 5-1 and/or 5-2 could also be provided with the material of the cables according to the invention, likewise because of the dirt-repellent and wear-resistant properties. Nevertheless, it may be advantageous to retain the flat strap shape, as this results in a more reliable and more readily synchronizable winding-up behaviour compared to a cable, which may of course overlap in an irregular fashion. This could result in the gripping jaw device being positioned at an angle, which does not occur, or hardly occurs, when using hoisting straps.

Figure 2 diagrammatically shows a side view of a livestock feed-displacement device 15 according to the invention.

The livestock feed-displacement device 15 comprises the livestock feed gripping jaw device 1 from Figures 1A/1B, provided on a travelling crab 20 which is displaceable on a rail system 22 by means of running wheels 21.

In a very diagrammatical fashion, reference numeral 16 shows a control unit for hoisting the gripping jaw device in the vertical direction (arrows A) and for displacing it along the rail system in the direction of arrows B and for opening and closing the gripping jaw halves 3 in order to grab a portion 17 from a pile of livestock feed 18.

The illustrated control unit 16 is shown here as being fitted in the travelling crab 20. Of course, the control unit may also be fitted elsewhere, such as advantageously fixed to a stationary part of the world, and operation of the travelling crab 20 and the gripping jaw device may take place via signal cables or a wireless system.

Obviously, when the device is being used, it will come into contact with livestock feed, such as for example silage. Due to the preserving method used, the latter is slightly acidic and, in addition, slightly sticky. This unfavourable combination of properties greatly increases wear of the known metal components, such as steel hoisting cables. According to the invention, this wear is greatly reduced by the advantageous combination of the low adhesiveness of the livestock feed and the intrinsic (mechanical) resistance to wear of, in particular, the UHMwPE.

The illustrated livestock feed-displacement device may be a separate device, for example for filling a livestock feed-mixing wagon or the like or even for directly filling a livestock feed trough. Advantageously, it forms part of a livestock feed system such as the Lely Vector™.

Fig. 3 diagrammatically shows a cross-sectional view of a cable 25 for use in a device according to the invention. The cable here comprises a core and a sheath. Here, the core comprises six strands of directed fibres, that is to say fibres whose UHMwPE molecules are substantially parallel to each other, such as Dyneema®, or a technical equivalent thereof such as Spectra®, as well as six strands of polyester fibres. This total of twelve strands are interwoven to form the core, having a diameter of approximately 5 mm. In an alternative embodiment, cable 25 may comprise a core of a plurality of bundles, each comprising two strands of identical material. Thus, a core as described above would then be composed of three bundles of in each case two strands of directed fibres, that is to say fibres whose UHMwPE molecules are substantially parallel to each other, such as Dyneema®, or a technical equivalent thereof such as Spectra®, as well as three bundles of in each case two strands of polyester fibres. Different numbers of strands are also possible, for example a core of sixteen strands. In this case, it is possible to distribute the sixteen strands across 8 bundles of in each case two strands of identical material.

The sheath here comprises 32 strands of extended polyamide, in particular Nylon 6,6, such as Cordura®. The strands are interwoven to form the sheath. Alternatively, the strands could also contain up to 25% of polyester fibres. The number of strands is not particularly limited, but 32 is a common number which can readily be processed.

The invention is not limited to the embodiments illustrated here. Rather, the scope of protection is determined by the attached claims.

## Claims

1. Device (2) for use in an agricultural livestock feed gripping jaw (1), comprising a drivable cable (10) and a frame (6) with a guide element (11), in particular a disc or a winding drum which is rotatable in the frame, around which guide element said cable is passed in such a way that when the cable is driven, the cable is guided over the guide element,
wherein the cable comprises a core and a sheath,
**characterised in that** the core comprises a plurality of first strands (30) of ultrahigh molecular weight polyethene fibres, in particular Dyneema® or an equivalent thereof, and comprises a plurality of second strands (31) of fibres of a polyester which are interwoven with the former,
wherein the sheath comprises a combination of a plurality of interwoven strands, containing 75-100% of third strands (32) of fibres of extended polyamide, in particular Nylon 6,6, and 0-25% of fourth strands of fibres of polyester,
and wherein the guide element, at least on the outer side thereof, comprises ultrahigh molecular weight polyethene, in particular HMPE 1000.

2. Device according to Claim 1, wherein the core comprises an equal number of first and second strands, in particular six of each.

3. Device according to one of the preceding claims, wherein the sheath contains 100% of third strands.

4. Device according to one of the preceding claims, wherein at least the outer side of the element is made of high molecular weight polyethene, in particular HMPE 1000.

5. Device according to one of the preceding claims, wherein the frame comprises a plurality of guide elements over which the cable moves when the cable is being driven, wherein each guide element is made, at least on the outer side thereof or in its entirety, of ultrahigh molecular weight polyethene, in particular HMPE 1000.

6. Livestock feed gripping jaw device (1), comprising two mutually coupled gripping jaw halves (3) and a gripping jaw opening and closing device which comprises a device (1) according to one of the preceding claims.

7. Livestock feed-displacement device (15), comprising a rail system (22) with a travelling crab (20) which is autonomously displaceable thereon, with a livestock feed gripping jaw device according to Claim 6 which is attached thereto so as to be autonomously height-adjustable, as well as a control system (16) for displacing the travelling crab, for adjusting the height of the livestock feed gripping jaw device and for controlling the gripping jaw opening and closing device.

## Patentansprüche

1. Vorrichtung (2) für den Gebrauch in einer landwirtschaftlichen Vieh-Futterspannbacke (1), die ein antreibbares Kabel (10) und einen Rahmen (6) mit einem Führungselement (11) umfasst, insbesondere eine Scheibe oder eine Wickeltrommel, die in dem Rahmen drehbar ist, wobei das Kabel derart um das Führungselement gelegt wird, dass das Kabel, wenn es angetrieben wird, über das Führungselement geführt wird,
wobei das Kabel einen Kern und einen Mantel umfasst,
**dadurch gekennzeichnet, dass**
der Kern eine Vielzahl erster Stränge (30) aus ultrahochmolekularen Polyäthylenfasern umfasst, insbesondere Dyneema® oder ein Äquivalent, und eine Vielzahl zweiter Stränge (31) aus Polyesterfasern, die mit den vorhergehenden verwoben sind, umfasst,
wobei der Mantel eine Kombination aus einer Vielzahl verwobener Stränge umfasst, die 75 bis 100 % dritter Stränge (32) aus Fasern aus erweitertem Polyamid enthält, insbesondere Nylon 6,6, und 0 bis 25 % vierter Stränge aus Polyesterfasern,
und wobei das Führungselement mindestens auf seiner Außenseite ultrahochmolekulares Polyäthylen, insbesondere HMPE 1000 umfasst.

2. Vorrichtung nach Anspruch 1, wobei der Kern eine gleiche Anzahl erster und zweiter Stränge, insbesondere je sechs umfasst.

3. Vorrichtung nach einem der vorhergehenden Ansprüche, wobei der Mantel 100 % dritter Stränge umfasst.

4. Vorrichtung nach einem der vorhergehenden Ansprüche, wobei mindestens die Außenseite des Elements aus ultrahochmolekularem Polyäthylen, insbesondere HMPE 1000 gefertigt ist.

5. Vorrichtung nach einem der vorhergehenden Ansprüche, wobei der Rahmen eine Vielzahl von Führungselementen umfasst, über die sich das Kabel bewegt, wenn das Kabel angetrieben wird, wobei jedes Führungselement mindestens auf seiner Außenseite oder zur Gänze aus ultrahochmolekularem Polyäthylen, insbesondere HMPE 1000 gefertigt ist.

6. Vieh-Futterspannbackenvorrichtung (1), die zwei gegenseitig gekoppelte Spannbackenhälften (3) und eine Spannbackenöffnungs- und Schließvorrichtung umfasst, die eine Vorrichtung (1) nach einem der vorhergehenden Ansprüche umfasst.

7. Vieh-Futterspannbackenverlagerungsvorrichtung (15), die ein Schienensystem (22) mit Laufkatze (20), die darauf autonom verlagerbar ist, umfasst, mit einer Vieh-Futterspannbackenvorrichtung nach Anspruch 6, die daran angebracht ist, so dass sie autonom höhenverstellbar ist, sowie ein Steuersystem (16) zum Bewegen der Laufkatze, zum Einstellen der Höhe der Vieh-Futterspannbackenvorrichtung und zum Steuern der Spannbackenöffnungs- und Schließvorrichtung.

## Revendications

1. Dispositif (2) à utiliser dans une mâchoire de préhension (1) de fourrage agricole pour bétail, comprenant un câble (10) pouvant être entraîné et un bâti (6) avec un élément guide (11), en particulier un disque ou un tambour d'enroulement qui peut tourner dans le bâti, élément guide autour duquel ledit câble est passé de telle façon que, quand on entraîne le câble, celui-ci est guidé sur l'élément guide,
dans lequel le câble comprend une âme et une gaine, **caractérisé en ce que** l'âme comprend une pluralité de premiers brins (30) en fibres de polyéthylène à poids moléculaire ultra-haut, en particulier du Dyneema® ou un équivalent de celui-ci, et comprend une pluralité de deuxièmes brins (31) en fibres de polyester qui sont entrelacés avec les précédents,
dans lequel la gaine comprend une combinaison d'une pluralité de brins entrelacés, contenant 75 à 100 % de troisième brins (32) en fibres de polyamide étendue, en particulier du Nylon 6,6, et 0 à 25 % de quatrième brins en fibres de polyester, et
dans lequel l'élément guide, au moins sur son côté extérieur, comprend du polyéthylène à poids moléculaire ultra-haut, en particulier du HMPE 1000.

2. Dispositif selon la revendication 1, dans lequel l'âme comprend un nombre égal de premiers et de deuxièmes brins, en particulier six de chaque.

3. Dispositif selon l'une quelconque des revendications précédentes, dans lequel la gaine contient 100 % de troisième brins.

4. Dispositif selon l'une quelconque des revendications précédentes, dans lequel au moins le côté extérieur de l'élément est fait de polyéthylène à poids moléculaire ultra-haut, en particulier du HMPE 1000.

5. Dispositif selon l'une quelconque des revendications précédentes, dans lequel le bâti comprend une pluralité d'éléments guides sur lesquels se déplace le câble quand il est entraîné, dans lequel chaque élément guide est fait, au moins sur son côté extérieur ou dans sa totalité, en polyéthylène à poids moléculaire ultra-haut, en particulier du HMPE 1000.

6. Dispositif (1) de mâchoire de préhension de fourrage pour bétail, comprenant deux moitiés (3) de mâchoire de préhension accouplées l'une à l'autre et un dispositif d'ouverture et de fermeture de mâchoire de préhension qui comprend un dispositif (1) selon l'une quelconque des revendications précédentes.

7. Dispositif (15) de manutention de fourrage pour bétail, comprenant un système (22) de rails avec un trolley (20) qui peut se déplacer sur eux de façon autonome, avec un dispositif de mâchoire de préhension de fourrage pour bétail selon la revendication 6 qui est fixé au trolley de façon à être réglable en hauteur de manière autonome, ainsi qu'un système de commande (16) pour déplacer le trolley, pour régler la hauteur de la mâchoire de préhension de fourrage pour bétail et pour commander le dispositif d'ouverture et de fermeture de la mâchoire de préhension.
